# EUROPÄISCHE PATENTSCHRIFT

(11) **EP 2 586 944 B1**
(45) Veröffentlichungstag und Bekanntmachung des Hinweises auf die Patenterteilung: **30.03.2016**
(21) Anmeldenummer: 11186607.5
(22) Anmeldetag: 26.10.2011
(51) Int. Cl.: E05D 7/00, E05D 3/02

(54) **Scharnier mit Verstellelementen und Verstellkrone für diese Verstellelemente**
Hinge with adjustment elements and adjustment cap for these adjustment elements
Charnière dotée d'éléments de réglage et d'une couronne de réglage destinée à ces éléments de réglage

(43) Veröffentlichungstag der Anmeldung: 01.05.2013
(73) Patentinhaber: Hasler, Josef, 9452 Hinterforst (CH)
(72) Erfinder: Hasler, Josef, 9452 Hinterforst (CH)
(74) Vertreter: Kaminski Harmann

(56) Entgegenhaltungen:
- EP-A1- 1 445 408
- EP-A1- 1 672 155
- EP-A2- 0 893 564
- WO-A1-2010/089942
- DE-A1- 3 507 156
- DE-U1- 20 117 305
- GB-A- 2 156 898
- GB-A- 2 415 013

## Beschreibung

Die Erfindung bezieht sich auf ein verstellbares Scharnier gemäß Oberbegriff des Anspruchs 1.

Verstellbare Scharniere sind an sich bekannt. Sie erlauben in der Regel wenigstens ein laterales Verschieben der durch das Scharnier miteinander verbundenen Elemente in wenigstens einer, meistens aber in mehreren Richtungen. Aus der EP 0962616 A1 ist beispielsweise ein verstellbares Scharnier für schwere Türen bekannt, bei dem eine laterale Verstellbarkeit senkrecht zur Längsachse des Scharniers durch die Verwendung einer Exzenterbüchse oder eines Exzenterbolzens ermöglicht wird. Eine Höhenverstellbarkeit wird über eine Schraube ermöglicht, die den Bolzen in der Büchse horizontal verschiebt. Für eine leichte Schwenkbarkeit der schweren Tür ist zwischen Lagerbüchse und Bolzen eine aus selbstschmierender Bronze gefertigte Druckscheibe vorgesehen.
Verstellelemente, wie beispielsweise Verstellschrauben, Büchsen, Exzenterbüchsen, Bolzen und Doppelbolzen, sowie zugehörige Kontermuttern, mit denen bestimmte Einstellungen eines komplexeren Bauteils, wie zum Beispiel auch die Einstellungen eines Scharniers eingestellt werden können, sind an sich ebenfalls bekannt. In der Regel haben solche Verstellelemente einen Kopf, der als Außensechskant oder Innensechskant ausgebildet ist und mit einem entsprechend gegengleich ausgebildeten Werkzeug bedient werden kann. Um ein weiteres unbeabsichtigtes Verdrehen eines solchen Verstellelementes und damit eine Änderung der getroffenen Einstellung zu verhindern, sind für solche Verstellelemente Verriegelungen vorgesehen, die zum Beispiel mit Hilfe eines entsprechend als Innensechskant oder Außensechskant ausgebildeten Werkzeuges angezogen/verriegelt oder gelöst/entriegelt werden können. Solche Verriegelungen können beispielsweise als Wurmschrauben, Feststellklammern, etc. oder in Form der bereits erwähnten Kontermuttern ausgebildet sein.

Für die Bedienung der Verstellelemente und der Verriegelungen während des Betriebs muss bei der bisherigen Ausgestaltung der Verstellelemente und der Verriegelungen relativ viel Platz in ihrer Umgebung gelassen werden, um die Zugänglichkeit mit einem entsprechenden Werkzeug zu gewährleisten. Nur so kann eine Nachjustierung erfolgen, ohne dass das Bauteil freigelegt oder ausgebaut werden muss.

Die Ausgestaltung der Verstellelemente und der Verriegelungen in der bisherigen Form, die wie beschrieben zwecks Verstellbarkeit relativ viel Platz in ihrer Umgebung beanspruchten, hat dazu geführt, dass verstellbare Scharniere nicht als verdeckte Scharniere ausgeführt werden konnten. Dies betraf Scharniere für leichte Türen, wie zum Beispiel für Schranktüren von Küchenschränken oder Kleiderschränken oder ähnliches, ebenso wie Scharniere für vertikal schwenkbare Fensterflügel oder horizontal kippbare Fenster, und Scharniere für schwere Türen, wie zum Beispiel für Zimmertüren, Eingangstüren, Brandschutztüren etc.. WO 2010/089942 A1 und EP 0 893 564 A2 zeigen Beispiele für eine bessere Zugänglichkeit der Verstellelemente eines Scharniers. Die gezeigten Scharniere dienen der schwenkbaren Verbindung eines ersten Elements mit einem zweiten Element. Sie weisen zwei übereinander und zueinander verdrehbar angeordnete Bauteile in Form von Lagerbuchsen auf, welche je ein Ende eines Doppelbolzens aufnehmen, so dass diese zueinander verdrehbar aber in Längsrichtung des Scharniers in ihrer Lage zueinander definiert sind. Von diesen beiden gegeneinander verdrehbaren Bauteilen steht radial bzw. ungefähr tangential je ein gerader Flansch weg, über welchen das jeweilige Bauteil mit einem der beiden Elemente verbindbar ist. Die Scharniere wiesen exzentrische Bauelemente auf, die als Verstellelemente dienen. Die Verstellelemente weisen Verstellkronen mit radialen Eingriffsöffnungen auf, in welche entsprechende Steckschlüssel einsteckbar sind. In WO 2010/089942 A1 sind diese Eingriffsöffnungen vorzugsweise gleichmäßig über den Umfang der Verstellkrone verteilt und mit Markierungen versehen.

Auch EP 1 672 155 A1 zeigt ein Scharnier mit zwei Lagerbuchsen, die durch einen Doppelbolzen miteinander drehbar verbunden sind. Eine Buchse ist direkt ohne Flansch an dem ein Element befestigt, während die andere Lagerbuchse einen gekrümmten Flansch aufweist der mit dem anderen Element verbindbar ist. Das freie Ende des Flansches ist durch die Krümmung von der Lagerbuchse weggeführt und weist eine Öse auf, die zu Verbindungszwecken über eine in einer Ausnehmung angeordnete Schiene des anderen Elementes eingehängt wird. Der Doppelbolzen ist exzentrisch ausgeführt und dient als Verstellelement. Nach Lösen eines Fixiermechanismus der zugleich die Funktion einer Verstellkrone übernimmt, kann auf die "Verstellkrone" zugegriffen und der Doppelbolzen in der Lagerbuchse verdreht werden, wodurch das Scharnier in lateraler Richtung eingestellt werden kann.

Obgleich die Zugänglichkeit der Verstellelemente in diesen drei Beispielen besser gelöst ist, so lassen sich doch auch diese Scharniere nicht verdeckt, in einem der beiden Elemente einbauen.

Aufgabe der vorliegenden Erfindung ist es ein verstellbares Scharnier bereit zu stellen, das auch unter hohen Krafteinwirkungen und/oder in kritischen Situationen seine Schwenkfunktion zuverlässig erfüllt.

Diese Aufgabe wird mit einem Scharnier gemäß den Merkmalen des Anspruches 1 gelöst.

Eine weitere Aufgabe ist es ein solches verstellbares Scharnier bereit zu stellen, das verdeckt einbaubar ist.

Das verstellbare Scharnier weist einen Bolzen und eine den Bolzen aufnehmende Lagerbuchse auf und dient dem schwenkbaren Verbinden eines ersten Elements mit einem zweiten Element. Es umfasst Verstellelemente und optional Verriegelungen, wobei ein erstes Vertellelement exzentrisch ausgestaltet ist und der lateralen Verschiebbarkeit der Elemente gegeneinander senkrecht zur Längsrichtung des Scharniers dient, und das zweite Verstellelement der Verschiebbarkeit der Elemente gegeneinander in Längsrichtung des Scharniers dient. Die Verstellelemente können optional mit einer Verriegelung versehen sein. Damit die Verstellelemente und optional die Verriegelungen auch bei beengten Platzverhältnissen und möglicherweise bei verdecktem Einbau, beispielsweise in einem Tür- oder Fensterrahmen verstellbar sind, sind die Verstellelemente und optional die Verriegelungen mit Verstellkronen versehen. Die Verstellkrone ist scheibenförmig oder ähnlich einer Scheibe mit kreisförmigem oder polygonem Umfang ausgebildet. Über ihren Umfang sind mehrere radiale Eingriffsöffnungen verteilt, die vorzugsweise gleichmäßig über den Umfang verteilt sind.

Besonders vorteilhaft ist es wenn die Verstellkrone mit einer oder mehreren Markierungen versehen ist, damit die Einstellung der Verstellelemente genauer erfolgen, kontrolliert, notiert und/oder wiederholt werden kann. Solche Markierungen können Kerben oder Farbzeichen oder ähnliches sein. Besonders vorteilhaft ist es, wenn jede Eingriffsöffnung mit einer Markierung versehen ist, am besten mit einer Markierung, die jede Eingriffsöffnung eindeutig identifiziert, z.B. mittels Buchstaben oder Zahlen.

Besonders einfach sind die Verstellkronen zu verstellen, wenn sie derart im Scharnier angeordnet sind, dass ihre radialen Eingriffsöffnungen senkrecht zur Längsrichtung des Scharniers ausgerichtet sind.

Das erste Verstellelement kann vorteilhafterweise als Exzenterbüchse oder als Exzenterbolzen ausgestaltet sein. Für eine dreidimensionale Verstellbarkeit können sowohl eine Exzenterbüchse als auch ein Exzenterbolzen als Verstellelemente vorgesehen sein.

Für die Verstellbarkeit in Längsrichtung des Scharniers ist es vorteilhaft als zweites Verstellelement eine Stellschraube vorzusehen, die verschiebend in Längsrichtung des Scharniers auf den Bolzen einwirkt. Als Verriegelung für die Stellschraube ist vorzugsweise eine Kontermutter vorgesehen, die ebenfalls mit einer Verstellkrone versehen ist.

Das Scharnier verfügt naturgemäss über zwei in der Längsrichtung des Scharniers einander gegenüberliegende und gegeneinander verdrehbare Bauteile. Bei einfachen Scharnieren sind dies ein Bolzen und eine den Bolzen aufnehmende Lagerbuchse, bei aufwendigeren Scharnieren sind dies zwei Lagerbuchsen, die je ein Bolzenende eines Doppelbolzens aufnehmen.

Für einen verdeckten Einbau des Scharniers ist es vorteilhaft, wenn ein erstes Bauteil dieser beiden oben beschriebenen Bauteile - die einander gegenüberliegen und gegeneinander verdrehbar sind - mit dem ersten Element verbindbar ist und ein zweites dieser beiden Bauteile über ein freies Ende eines gekrümmten Flansches bzw. eines gekrümmten Verbindungsarms mit dem zweiten Element verbindbar ist. Die Krümmung des Flansches bzw. Verbindungsarms ist so gewählt, dass der Flansch bzw. Arm teilweise um das Bauteil herumgeführt ist.

In einer besonders bevorzugten Ausführungsform ist die Krümmung so gewählt, dass der Flansch bzw. Arm teilweise um das Bauteil herumgeführt ist und das freie Ende des Flansches bzw. Armes ausserhalb der Tangente des drehbaren Bauteils liegt, in der der Flansch bzw. Arm am zweiten Bauteil angreift. Auf diese Weise kann die Drehachse, um die die beiden Element gegeneinander verschwenkt werden, aus der Längsachse des Scharniers hinaus verlagert werden und die beiden Elemente können verschwenkt werden, obgleich die Längsachse des Scharniers in einem der beiden Elemente liegt.

Das Element, das zur Aufnahme des Scharniers bestimmt ist, ist oder wird mit einer Ausnehmung versehen, in die das Scharnier eingebaut werden kann. Ist das Scharnier bestimmungsgemäß eingebaut, sind seine wesentlichen Bauteile, nämlich insbesondere die beiden einander in Längsrichtung gegenüberliegenden und gegeneinander verdrehbaren Bauteile, innerhalb dieser Ausnehmung platziert und nur das freie Ende des gekrümmten Flansches bzw. Verbindungsarmes ragt aus der Ausnehmung heraus. Der Flansch bzw. Verbindungsarm ist aus der Ausnehmung heraus und in diese hinein verschwenkbar.

Weiter umfasst das Scharnier vorteilhafter Weise eine Abdeckplatte, mit der die Ausnehmung derart verschließbar ist, dass der gekrümmte Flansch durch eine Öffnung der Abdeckplatte in der beschriebenen Form herausragt und verschwenkbar ist. Die Abdeckplatte verdeckt dabei bevorzugt wenigstens teilweise den Projektionsbereich wenigstens eines der beiden einander in Längsrichtung gegenüberliegenden und gegeneinander verdrehbaren Bauteile, wobei die Funktion des Flansches bzw. Verbindungsarmes gewährleistet bleibt.

In einer vorteilhaften Ausgestaltung des Scharniers dient die Abdeckplatte als Anschlag für die Schwenkbewegung des Flansches, damit dieser nicht zu weit aufschwenkt und/oder als Schutz für die Begrenzung der Ausnehmung, die bei zu weitem Aufschwenken durch den Flansch beschädigt werden könnte. Die Abdeckplatte dient vorzugsweise auch als Schutz für das Scharnier gegen Feuchtigkeit, Hitze, Schmutz. Je nach Ausgestaltung dient die Abdeckplatte auch als optische Verkleidung der Ausnehmung.

Die zwei in der Längsrichtung des Scharniers einander gegenüberliegenden und gegeneinander verdrehbaren Bauteile sind vorteilhafter Weise mittels Befestigungsplatten mit den Elementen verbindbar, wobei eine Befestigungsplatte am freien Ende des gekrümmten Flansches bzw. des gekrümmten Verbindungsarmes angeordnet ist. Der Flansch weist eine Krümmung auf, die so gewählt ist, dass in einer ersten geschlossenen Stellung des Scharniers, die beiden Befestigungsplatten in einer Ebene oder in zwei parallelen nahe beieinander liegenden Ebenen liegen. In einer zweiten maximal offenen Stellung des Scharniers liegen die beiden Befestigungsplatten dann in einem Winkel von etwa 90° bis 110° zueinander. Sind andere Mittel als Befestigungsplatten vorgesehen um die zwei in der Längsrichtung des Scharniers einander gegenüberliegenden Bauteile mit den Elementen zu verbinden, ist die Krümmung des Flansches analog zu wählen.

Sind die zwei in der Längsrichtung des Scharniers einander gegenüberliegenden und gegeneinander verdrehbaren Bauteile des Scharniers zwei Lagerbuchsen und sind diese mittels Doppelbolzen miteinander verbunden, so ist es besonders vorteilhaft, wenn der Doppelbolzen ein Exzenterbolzen ist und zwischen seinen beiden Bolzenenden eine zweite Verstellkrone aufweist. Wenigstens eines seiner beiden Bolzenenden ist dann gegenüber der zweiten Verstellkrone exzentrisch angeordnet. Dies ist eine Möglichkeit eine Verstellbarkeit der beiden Elemente zueinander in lateraler Richtung senkrecht zur Längsrichtung des Scharniers zu realisieren.

Eine andere Möglichkeit besteht darin wenigstens in einer der beiden Lagerbuchsen eine Exzenterbüchse drehbar zu lagern, die eine erste Verstellkrone aufweist. Werden beide Möglichkeiten im gleichen Scharnier realisiert, erhält man - stellt man sich ein kartesisches Koordinaten System vor - eine Verstellbarkeit in y-Richtung und z-Richtung.

Die Verstellbarkeit in x-Richtung wird, wie oben beschrieben, durch eine mit einer vierten Verstellkrone versehenen Stellschraube realisiert, die verschiebend in Längsrichtung des Scharniers auf den Bolzen einwirkt. Als Verriegelung für die Stellschraube ist vorzugsweise eine Kontermutter vorgesehen, die mit einer dritten Verstellkrone versehen ist.

In Längsrichtung des Scharniers wirkende Kräfte zwischen einem Bolzen und einer Lagerbuchse werden über eine Druckscheibe geleitet, wobei die Lagerbuchse vorzugsweise eine Durchgangsöffnung aufweist, über welche Schmiermittel eingebracht werden kann.

Die Druckscheibe weist ein Kanalsystem für die Verteilung von Schmiermittel auf.

Für die Anwendung in Scharnieren haben sich Druckscheiben besonders bewährt, die eine zentrale Durchgangsöffnung aufweisen und wenigstens auf einer Seite eine Kreuznut oder eine Stichnut haben, welche die Durchgangsöffnung mit einer Kreisnut und/oder mit einer Umfangsnut verbinden. Werden solche Druckscheiben in einem Scharnier der hier vorgestellten Art eingesetzt, so sind die Durchgangsöffnungen der Lagerbuchsen vorzugsweise so angeordnet, dass sie mit der Durchgangsöffnung der Druckscheibe fluchten, was ein einfaches und effizientes Einbringen eines Schmiermittels ermöglicht.

Besonders vorteilhaft ist es, wenn die Druckscheibe aus Bronze, insbesondere selbstschmierender Bronze gefertigt ist.

Besonders vorteilhaft wird das Scharnier aber bereits mit einer dauerhaften Schmierung, beispielsweise geschmiert mit STRABURAGS NBU 30 PTM ® (von Klueber Lubrication Zürich) eingebaut. Ein derart geschmiertes Scharnier benötigt in der Regel kein Nachschmieren.

Die Verstellkronen der beschriebenen Art sind innerhalb eines Scharniers der hier vorgestellten Art zusätzlich oder als Ersatz für einen Kopf, beispielsweise für einen Innen- oder Aussensechskantkopf eines Bolzens, Doppelbolzens, Exzenterbolzens, einer Büchse, Exzenterbüchse oder Schraube, oder als Aussengestaltung einer Mutter eingesetzt.

Weitere Ausführungsformen des Scharniers bzw. einzelner seiner Bauteile sind in den Ansprüchen beschrieben.

Das erfindungsgemäße Scharnier und einzelne seiner Bauteile werden nachfolgend anhand eines in den Figuren dargestellten Ausführungsbeispiels näher beschrieben. Die Darstellungen sind skizzenhaft und zwecks einer besseren Erkennbarkeit sind verschiedenen Größenverhältnisse nicht der Realität entsprechend wiedergegeben. Die Erläuterungen erfolgen rein beispielhaft und haben keine beschränkende Wirkung. Die Figuren zeigen rein schematisch:
- Fig. 1: in einer Explosionsansicht eine erste Ausführungsform des erfindungsgemäßen Scharniers;
- Fig. 2: in einer perspektivischen Ansicht das Scharnier aus Fig. 1 in zusammengebautem Zustand;
- Fig. 3: das Scharnier aus Fig. 2 im Schnitt entlang der Längsrichtung des Scharniers;
- Fig. 4: eine erste Ausführungsform einer Verstellkrone, in Draufsicht und Seitenansicht;
- Fig. 5: eine zweite Ausführungsform einer Verstellkrone in perspektivischer Ansicht;
- Fig. 6: ein erfindungsgemäßes Scharnier in Draufsicht in einer ersten geschlossenen Position zwei Elemente miteinander verbindend;
- Fig. 7: das Scharnier aus Fig. 6 in einer zweiten nicht ganz geöffneten Position;
- Fig. 8: eine erste Ausführungsform einer Druckscheibe; und
- Fig. 9: eine zweite Ausführungsform einer Druckscheibe;

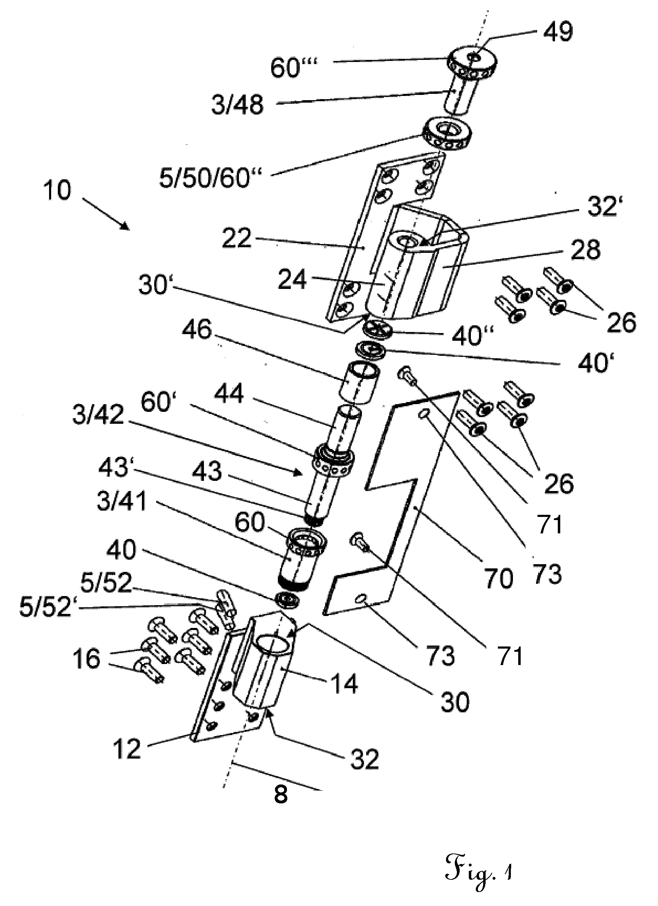

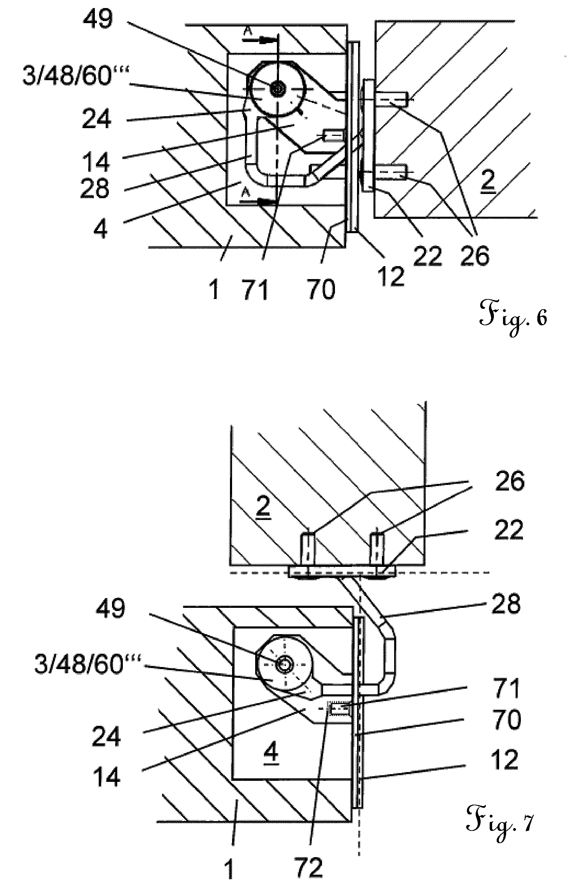

In den Figuren 1 bis 9 sind ein erfindungsgemäßes Scharnier 10 und verschiedene Bauteile des Scharniers 10 im Einzelnen dargestellt. Gleiche Bauteile/Elemente sind in den verschiedenen Figuren mit denselben Bezugszeichen gekennzeichnet. Das Scharnier 10 dient dazu ein erstes Element 1 und ein zweites Element 2 (vgl. Figuren 6 und 7) derart miteinander zu verbinden, das sie um eine Längsachse des Scharniers 10 gegeneinander verschwenkbar sind, wobei das Scharnier 10 wenigstens in zwei Dimensionen einstellbar ist. Erfindungsgemäß ist das Scharnier 10 so ausgebildet, dass die wesentlichen Bauteile des Scharniers 10 im eingebauten Zustand im Wesentlichen in einem der beiden Elemente 1, 2 untergebracht sind. Das Element 1, 2 kann hierfür mit einer entsprechenden Ausnehmung 4 (vgl. Figuren 6 und 7) versehen sein oder versehen werden. Damit das Scharnier 10 auch im eingebauten Zustand einstellbar ist, sind Verstellelemente 3 und gegebenenfalls auch zugehörige Verriegelungen 5 mit einer Verstellkrone 60, 60', 60'', 60"' versehen.

Typische Verstellelemente 3, die mit einer Verstellkrone 60, 60', 60", 60"' versehen sind, sind Bolzen, Doppelbolzen, Exzenterbolzen, Büchsen, Exzenterbüchsen und Schrauben. Typische Verriegellungen, die mit einer Verstellkrone 60, 60', 60", 60" versehen sein können, sind Schrauben und Kontermuttern. Die Verstellkrone wird typischerweise zusätzlich oder besser anstelle eines gewöhnlichen Innen- oder Außensechskant Bolzenkopfes bzw. Schraubenkopfes oder zusätzlich bzw. anstelle der Außengestaltung einer gewöhnlichen Schechskant-Mutter verwendet.

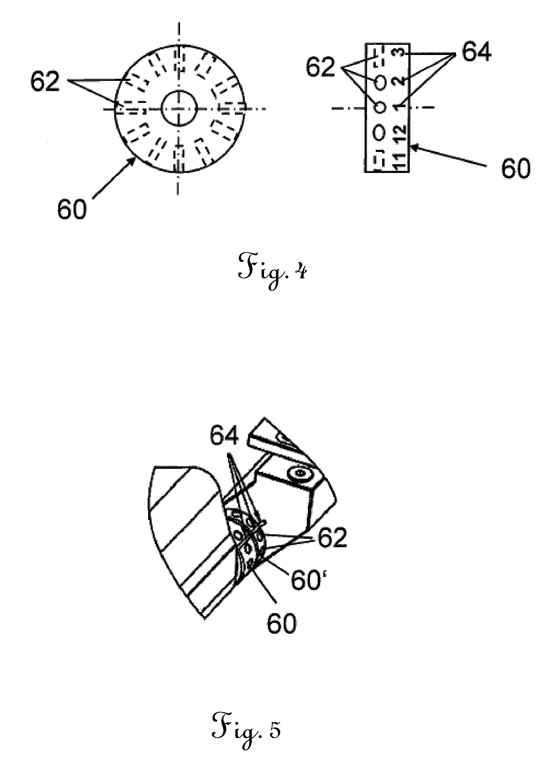

Die Verstellkrone 60, 60', 60", 60"' ist ähnlich einer Scheibe mit kreisförmigem oder polygonem Umfang ausgebildet und weist über ihren Umfang verteilt mehrere radiale Eingriffsöffnungen 62 auf (vgl. Fig. 4 und 5), die vorzugsweise gleichmäßig über den Umfang verteilt sind. Die Eingriffsöffnungen 62 können beispielsweise als Hohlzylinder, Innensechskant/Innenpolygon ausgebildet sein oder mit einem Innengewinde versehen sein. Ein Bedienwerkzeug für die Verstellkronen ist als Stift oder abgewinkelter Stift mit einem entsprechend gegengleich ausgebildeten Kopf ausgebildet. Werden Eingriffsöffnung und Bedienwerkzeug in besonderer Art ausgestaltet (z.B. Gewinde mit spezieller Steigung oder spezielles Polygon), so kann die Verwendung der Verstellkrone auch als Sicherung gegen das Verstellen durch Unbefugte eingesetzt werden.

Vorteilhafter Weise ist die Verstellkrone 60 mit einer oder mehreren Markierungen 64 versehen, die eine wiederholbare Einstellung des mit der Verstellkrone 60, 60', 60", 60"' versehenen Verstellelementes 3 erlaubt. Besonders vorteilhaft ist es, wenn jede Eingriffsöffnung 62 eine Markierung 64 aufweist. Noch besser ist es wenn mittels der Markierung 64 jede Eingriffsöffnung 62 eindeutig identifizierbar ist, da dann auch Feinjustierungen notiert und wiederholbar eingestellt werden können. Eine solche Markierung kann in der Indizierung der Eingriffsöffnungen durch Zahlen oder Buchstaben bestehen (vgl. Fig. 4). Eine andere Art der Markierung besteht zum Beispiel in Kerben, die beispielsweise eine Ausgangsstellung oder eine Zielstellung markieren, wie dies in Fig. 5 dargestellt ist. Der Vorteil der beschriebenen Verstellkronen 60, 60', 60", 60"' ist ihre gute Zugänglichkeit für das Bedienwerkzeug und somit ihre gute Verstellbarkeit auch im eingebauten Zustand unter sehr beengten Platzverhältnissen. Das heißt für Anwendungen, bei denen im eingebauten Zustand sehr beengte Platzverhältnisse herrschen, aber trotzdem eine Verdrehbarkeit eines Bolzens, einer Büchse, einer Schraube oder Mutter gewährleistet werden soll, kann ein Bolzen, eine Büchse, eine Schraube oder Mutter mit einer entsprechenden Verstellkrone 60, 60', 60", 60"' verwendet werden und die Verstellbarkeit bleibt trotz der engen Platzverhältnisse gewährleistet.

Für das erfindungsgemäße Scharnier 10 heißt dies, dass es durch Verwendung von Verstellelementen 3 und gegebenenfalls von Verriegelungen 4 mit Verstellkronen 60, 60', 60", 60"' in eine Ausnehmung 4 eines der Elemente 1, 2, die es verbindet, eingebaut werden kann und, dass es trotzdem verstellbar bleibt.

Um ein störungsfreies Verschwenken der Elemente 1, 2 zu ermöglichen ist es vorteilhaft, wenn eines der beiden Elemente 1, 2 über einen gekrümmten Flansch 28 mit einem in der Längsachse des Scharniers 10 liegenden Element 1, oder 2 verbunden ist. Der Flansch 28 ist in seiner Krümmung so ausgelegt, dass er teilweise um das Bauteil herumführt. Sein freies Ende liegt dann ausserhalb der Tangente in der der Flansch am Bauteil angeordnet ist.

Ein erstes Beispiel für ein erfindungsgemäßes in drei Richtungen verstellbares Scharnier 10 ist in den Figuren 1 bis 3 sowie 5 und 6 dargestellt. Dieses Ausführungsbeispiel des erfindungsgemäßen Scharniers 10 ist für die Verbindung schwerer Elemente miteinander geeignet und kann also beispielsweise in eine Ausnehmung 4 einer Tür, eines Türpfostens oder eines Fensterrahmens, eingebaut werden. Die hohen auftretenden Kräfte werden in diesem Scharnier durch Druckscheiben 40, 40', 40" aufgenommen, so dass sich die Elemente 1, 2 trotz des Gewichtes der schweren Elemente leicht gegeneinander verschwenken lassen. Dies ist besonders wichtig bei Sicherheitstüren. Die Druckscheiben 40, 40', 40" sind dann besonders vorteilhaft aus Bronze, insbesondere aus selbstschmierender Bronze gefertigt.

Das erfindungsgemäße Scharnier 10 der Figuren 1 bis 3 weist eine erste Befestigungsplatte 12 mit einer ersten Lagerbuchse 14 auf, die mit Hilfe von Befestigungsmitteln 16 an einem ersten Element 1 befestigbar ist. Weiter weist das Scharnier 10 eine zweite Befestigungsplatte 22 mit einer zweiten Lagerbuchse 24 auf, die mittels Befestigungsmitteln 26 mit dem zweiten Element 2 verbindbar ist (vgl. Figuren 6 und 7). Die Befestigungsmittel 16, 26 sind in diesem Fall als Senkschrauben ausgebildet und die Befestigungsplatten 12, 22 sind dafür vorgesehen jeweils außen an den Elementen 1, 2 angebracht und fixiert zu werden. Es können aber auch andere bekannte Befestigungsmittel 16, 26, wie Nägel, Bolzen oder Klammern verwendet werden und eine der Befestigungsplatten 12, 22 kann auch von innen, das heißt beispielsweise von Seite der Ausnehmung 4 her an dem Element 1, 2 fixiert sein. Solche Varianten ändern am Grundgedanken der Erfindung nichts.

Die Ausnehmung 4 kann aus optischen Gründen und zur Vermeidung einer Verschmutzung mit einer Abdeckplatte 70 verschlossen werden (vgl. insbesondere Fig. 1, 2, 6, 7). Die Abdeckplatte 70 wird vorzugsweise nach Fixierung der Befestigungsplatten 12, 22 an den beiden Elementen 1, 2 und dem Zusammensetzen des Scharniers 10 mit Befestigungsmitteln 71, mit dem Element 1, 2, das die Ausnehmung 4 aufweist, verbunden. Dabei kann es direkt mit dem Element verbunden werden oder aber indirekt über die Lagerbüchse, die an dem entsprechenden Element befestigt ist. In dem in den Figuren 6 und 7 gezeigten Beispiel also mit Element 1 bzw. der ersten Lagerbuchse 14 mit ihrer ersten Befestigungsplatte 12.

Vorzugsweise sind als Befestigungsmittel 71 Bolzen oder Schrauben und insbesondere Senkschrauben vorgesehen. Das Element bzw. die Lagerbuchse oder die Befestigungsplatte weisen dann entsprechende Befestigungsmöglichkeit 72, beispielsweise in Form von einer oder mehreren Aufnahmeöffnungen für Befestigungsbolzen oder einer oder mehrere Gewindebohrungen für die Aufnahme von Befestigungsschrauben auf (Fig. 6 und 7). Die Abdeckplatte 70 ist passend hierzu mit durchgehenden Öffnungen 73 versehen, die mit den Befestigungsmöglichkeiten 72 im Element bzw. in der Lagerbuchse und ihrer Befestigungsplatte zum Fluchten gebracht werden kann.

Sollen Abdeckplatte 70 und beispielsweise die erste Befestigungsplatte 12 eine Ebene bilden, so kann, wie dies im Ausführungsbeispiel der Figuren 1 bis 3 gezeigt ist, die erste Lagerbuchse 14 mit ihrem inneren Ende 30 ihre erste Befestigungsplatte 12 überragen und in diesem die Befestigungsplatte 12 überragenden Bereich die Befestigungsmöglichkeit 72 aufweisen (Fig. 1). Die Abdeckplatte 70 und die Befestigungsplatte 12 weisen dann vorzugsweise die gleich Dicke auf. Diese Variante kann aus optischen Gründen sinnvoll sein oder aber wenn das Scharnier 10 sehr dicht schließen soll, wie beispielsweise im Falle von Brandschutztüren.

Die zweite Lagerbuchse 24 ist über einen gebogenen Flansch 28 mit der zweiten Befestigungsplatte 22 fest verbunden. Statt des gebogenen bzw. gekrümmten Flansches kann auch ein gebogener bzw. gekrümmter Verbindungsarm vorgesehen sein oder es können mehrere Flansche oder Verbindungsarme vorgesehen sein. Die Krümmung des gebogenen Flansches 28 ist dabei so gewählt, dass in einer ersten geschlossenen Stellung des Scharniers, wie sie in Figur 6 dargestellt ist, die beiden Befestigungsplatten 12, 22 in einer Ebene oder in zwei parallelen sehr nahe beieinander liegenden Ebenen liegen. Wobei sehr nahe bei einander einen Abstand der Ebenen von 0mm (gleiche Ebene) bis 1cm oder 1,5 cm, je nach verwendetem Material (Holz, Stahl, Aluminium, Kunststoff) und Anforderungen an die Dichtung (Dichtmaterial und Dicke des verwendeten Dichtmaterials) bedeutet und parallele Ebenen bedeutet, dass Abweichungen von einer absoluten Parallelität im Bereich von technischen Toleranzen von 0° bis 5° beinhaltet sind. Weiter ist die Krümmung so gewählt, dass die beiden Befestigungsplatten 12, 22 in einer zweiten maximal offenen Stellung des Scharniers in einem Winkel von etwa 90° bis 110° zueinander stehen. In Figur 7 ist beispielhaft eine offene, wenn auch nicht maximal offene Stellung gezeigt, in der die beiden Befestigungsplatten 12, 22 in einem Winkel von 90° zueinander stehen.

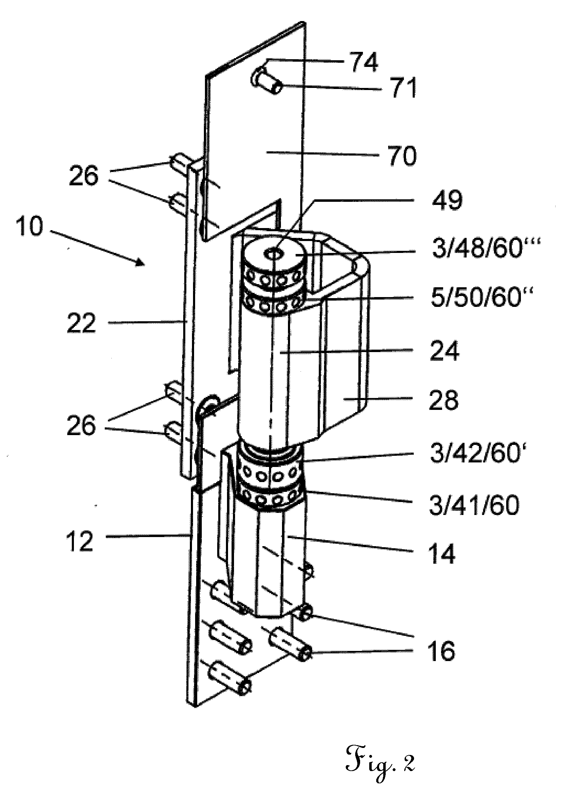

Die erste Lagerbuchse 14 und die zweite Lagerbuchse 24 sind in zusammengebautem Zustand des Scharniers 10 in Längsrichtung 8 des Scharniers 10 einander gegenüberliegend angeordnet (vgl. Fig. 2), wobei ihr jeweils inneres Ende 30, 30' der anderen Lagerbuchse zugewandt und ihr jeweils äußeres Ende 32, 32' der anderen Lagerbuchse abgewandt ist. Die Lagerbuchsen 14, 24 sind je an ihrem inneren Ende 30, 30' für die Aufnahme weiterer Bauteile des Scharniers 10 offen.

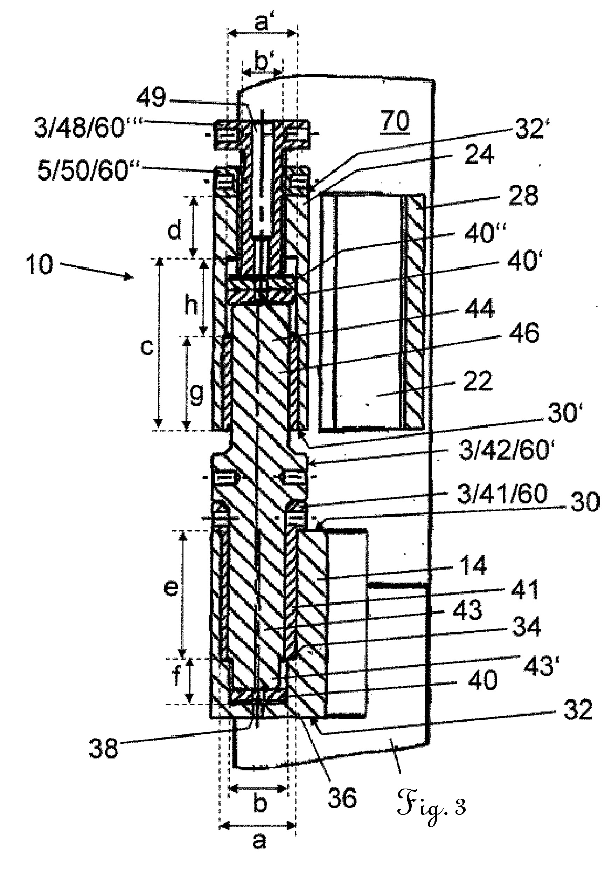

Die erste Lagerbuchse 14 weist an ihrem inneren Ende 30 über einen Abschnitt e einen ersten Innendurchmesser a auf und an ihrem äußeren Ende 32 über einen Abschnitt f einen zweiten Innendurchmesser b. Der zweite Innendurchmesser b ist kleiner als der erste Innendurchmesser a und von diesem durch eine Schulter 34 abgesetzt. Bis auf eine kleine Durchgangsöffnung 38 ist die erste Lagerbuchse 14 an ihrem äußeren Ende 32 durch einen Buchsenboden 36 geschlossen (vgl. Fig. 3).

Im zusammengebauten Scharnier 10 (vgl. Figuren 1, 3) ist am Buchsenboden 36 der ersten Lagerbuchse 14 eine erste Druckscheibe 40 abgestützt. Die Druckscheibe 40 ist ebenfalls mit einer Durchgangsöffnung 39 versehen, die mit der Durchgangsöffnung 38 im Buchsenboden 36 fluchtet. Die Durchgangsöffnungen 38, 39 ermöglichen, wenn nötig, das Einbringen eines Schmiermittels.

Auf der Schulter 34 der ersten Lagerbuchse 14 ist eine Exzenterbüchse 41 gleitend drehbar gelagert. Die Exzenterbüchse 41 ragt über das innere Ende 30 der ersten Lagerbuchse 14 hinaus und ist in diesem hinausragenden Bereich mit einer nach außen überstehenden ersten Verstellkrone 60 versehen.

In der Exzenterbüchse 41 ist ein Doppelbolzen 42 mit seinem ersten Bolzenende 43 gleitend drehbar gefasst. Das erste Bolzenende 43 weist an seinem freien Ende einen Abschnitt 43' mit geringerem Durchmesser auf, der in zusammengebautem Zustand in den Bereich e mit dem geringeren zweiten Innendurchmesser b der ersten Lagerbuchse 14 hineinreicht und dort auf der ersten Druckscheibe 40 abgestützt ist.

Der Doppelbolzen 42 ist etwa in seiner Mitte mit einer Verdickung in der Form einer zweiten Verstellkrone 60' ausgestattet, von der sich in Längsrichtung ein zweites Bolzenende 44 entgegengesetzt zum ersten Bolzenende 43 erstreckt. In zusammengebautem Zustand ist das zweite Bolzenende 44 in der zweiten Lagerbuchse 24 gefasst, so dass die beiden Lagerbuchsen 14, 24 im zusammengebauten Scharnier 10 mittels des Doppelbolzens 42 in Längsrichtung 8 des Scharniers 10 einander gegenüber platziert und gehalten sind. Das zweite Bolzenende 44 ist in der zweiten Lagerbuchse 24 gleitend drehbar gelagert.

Die zweite Lagerbuchse 24 weist an ihrem inneren Ende 30' einen ersten Innendurchmesser a' auf der sich über eine Länge c der Lagerbuchse 24 erstreckt. An ihrem äußeren Ende 32' weist sie einen zweiten Innendurchmesser b' auf, der sich über eine Länge d der zweiten Lagerbuchse 24 erstreckt. Der zweite Innendurchmesser b' ist kleiner als der erste Innendurchmesser a' und von diesem durch eine Schulter 34' abgesetzt. Der Bereich d mit dem kleineren Innendurchmesser b' ist als Durchgangsöffnung ausgeführt und also auch vom äußeren Ende 32' der zweiten Lagerbuchse 24 her zugänglich.

Beim Zusammenbauen des Scharniers 10 werden zunächst eine zweite und eine dritte Druckscheiben 40', 40" vom inneren Ende 30' der zweiten Lagerbuchse 24 in diese eingesetzt, so dass sie an der Schulter 34 der zweiten Lagerbuchse 24 abgestützt sind. Dann wird eine Lagerbüchse/Pressbüchse 46 in das offene innere Ende 30' der zweiten Lagerbüchse eingepresst. Die Lagerbüchse 46 wird so eingepresst, dass die beiden Druckscheiben 40', 40" im Innern der Lagerbuchse 24 in Längsrichtung 8 des Scharniers 10 zwischen der Lagerbüchse 46 und der Schulter 34' über eine Distanz h verschiebbar sind.

Durch die Abstützung an der Schulter 34' einerseits und der Lagerbüchse 46 andererseits sind die beiden Druckscheiben 40', 40" nach einpressen der Lagerbüchse 46 vor dem Herausfallen gesichert. Die eingepresste Lagerbüchse 46 weist vorzugsweise eine Längenerstreckung g auf, die geringer ist als die Längenerstreckung c, über die sich der erste Innendurchmesser a' erstreckt. Noch besser ist es, wenn, so wie dies in Fig. 3 dargestellt ist, die Längenerstreckung g der eingepressten Lagerbüchse 46 so bemessen ist, dass sie zusammen mit der Distanz h die Längenerstreckung c ergibt, über die sich der erste Innendurchmesser a' erstreckt. Auf diese Weise ist es möglich, die Lagerbüchse 46 über ihre gesamte Länge g in die zweite Lagerbuchse 46 einzupressen, ohne dass sie einerseits am inneren Ende 30' über die zweite Lagerbuchse 24 hinausragt und andererseits die Druckscheiben 40', 40" dennoch im Inneren über die Distanz h verschiebbar sind.

Der zweite Innendurchmesser b' der zweiten Lagerbuchse 24 ist mit einem Innengewinde ausgestattet und dient der Aufnahme einer mit einem Außengewinde versehenen Stellschraube 48, die vom äußeren Ende 32' in die zweite Lagerbuchse 24 eingedreht wird. Zur Sicherung wird vor dem Eindrehen der Stellschraube 48 in die zweite Lagerbuchse 24 eine Kontermutter 50 auf die Stellschraube 48 aufgeschraubt. Die Kontermutter 50 ist mit einer dritten Verstellkrone 60" und Stellschraube 48 mit einer vierten Verstellkrone 60"' versehen.

Die Stellschraube 48 weist eine zentrische Durchgangsöffnung 49 auf die mit den Durchgangsöffnungen 39 der Druckscheiben 40', 40" fluchtet, so dass auch hier, wenn nötig eine Schmierung möglich ist.

Die Druckscheiben 40, 40', 40" sind besonders vorteilhaft aus Bronze, insbesondere aus selbstschmierender Bronze gefertigt.

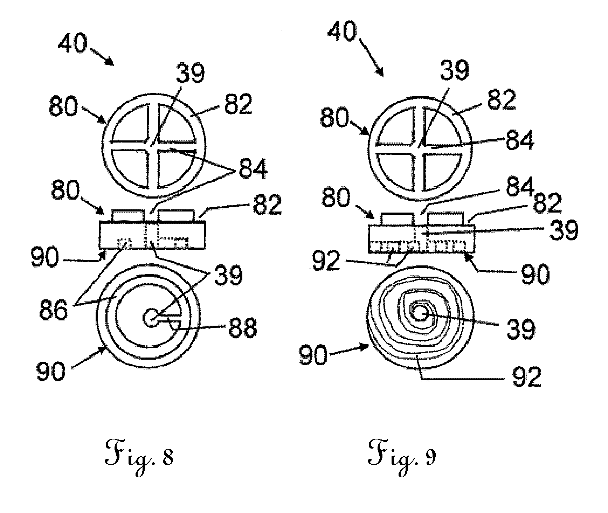

Die Druckscheiben 40, 40', 40" weisen eine zentrale Durchgangsöffnung 39 auf, so wie dies in den Figuren 8 und 9 im Detail dargestellt ist. Auf einer ersten Seite 80 weisen sie außerdem eine Kreuznut 84 auf, welche die Durchgangsöffnung 39 mit einer Umfangsnut 82 verbindet. In dem in Figur 8 gezeigten Beispiel weist die Druckscheibe des Weiteren auf ihrer zweiten Seite 90 eine Stichnut 88 auf, welche die Durchgangsöffnung 39 mit einer Kreisnut 86 verbindet. Denkbar ist es natürlich auch die Kreisnut 86 mittels Kreuznut 84 und die Umfangsnut 82 mittels Stichnut 88 mit der Durchgangsöffnung 39 zu verbinden oder andere Nutformen für eine solche Verbindung vorzusehen. Eine weitere Variante ist in Figur 9 gezeigt, bei auf der zweiten Seite 90 der Druckscheibe 40 die Durchgangsöffnung 39 mittels einer Spiralnut 92 mit dem Umfang der Druckscheibe 40 in Verbindung steht. Statt auf beiden Seiten 80, 90 kann natürlich auch nur auf einer Seite ein Kanalsystem für die Verteilung von Schmiermittel vorgesehen sein. Bei sehr schweren Türen oder bei hohen Sicherheitsanforderungen, wie beispielsweise bei Brandschutztüren, ist aber eine doppelseitige Schmiermittelverteilung via Nuten vorzuziehen, da die Schmierung noch sicherer gewährleistet werden kann.

Als besonders vorteilhaft hat es sich herausgestellt an besonders durch Bewegung belasteten Orten zwei Druckscheiben vorzusehen und diese dann mit ihren jeweils zweiten Seiten 90, versehen mit Kreisnut 86 und Stichnut 88, zueinander auszurichten.

Vom inneren Ende 30' der zweiten Lagerbuchse 24 greift in zusammengebautem Zustand der Doppelbolzen 41 mit seinem zweiten Bolzenende 44 durch die Pressbüchse 46 hindurch in die zweite Lagerbuchse 24 ein und drückt gegen die Druckscheiben 40', 40".

Wie aus den Figuren 6 und 7 gut zu erkennen ist, sind in eingebautem zustand die wesentlichen Elemente, nämlich die beiden Lagerbuchsen 14, 24 und der Doppelbolzen 42 in der Ausnehmung 4 des einen Elementes untergebracht. Nur das freie Ende des gekrümmten Flansches 28 ragt aus der Ausnehmung 4 heraus und der Flansch 28 kann aus der Ausnehmung 4heraus und wieder zurück in die Ausnehmung 4 hinein verschwenkt werden. Ist eine Abdeckplatte 70 vorgesehen, ist sie so angeordnet und ausgestaltet, dass der Flansch mit seinem freien Ende auch aus einer Öffnung der Abdeckplatte 70 hinaus ragt und sich durch diese Öffnung hindurch frei verschwenken lässt.

Wie aus Figur 3 gut ersichtlich, ist die Länge der Steallschraube 48 größer als die Länge d, über die sich der zweite Innendurchmesser b' erstreckt, so dass die Stellschraube 48 auf die Druckscheiben 40', 40" durchgreift. Durch Verdrehen der Stellschraube 48 werden die Druckscheiben 40', 40" entlang der Distanz h verschoben, wodurch die Distanz der beiden Lagerbuchsen zueinander verändert wird. Auf diese Weise lässt sich somit eine erste Verstellbarkeit, nämlich eine laterale Verschiebung der beiden Elemente 1, 2 gegeneinander in Richtung der Längsrichtung 8 des Scharniers 10 erreichen. Ist das Scharnier 10 derart zwischen zwei Elementen 1, 2 eingebaut, dass sich seine Längsrichtung 8 vertikal erstreckt (z.B. bei Türen) entspricht dies einer Höhenverstellbarkeit um die Distanz h.

Wie üblich, variiert die Wanddicke der Exzenterbüchse 41 aufgrund der exzentrischen Anordnung ihres Hohlzylinders in Umfangsrichtung (vgl. Fig. 3). Durch Verdrehen der Exzenterbüchse 41 lässt sich daher senkrecht zur Längsrichtung 8 des Scharniers 10 eine laterale Verschiebung der beiden Elemente 1, 2 gegeneinander erreichen. Zusammen mit der Verstellbarkeit in Längsrichtung des Scharniers 10 erhält man so ein zweidimensional einstellbares Scharnier 10. Die Durch Verdrehen der Exzenterbüchse erreichte Einstellung der Elemente 1, 2 zueinander kann mit einer Verriegelung 52, die in dem in den Figuren gezeigten Beispiel als Wurmschraube ausgebildet ist, fixiert werden. Die Lagerbuchse weist eine entsprechende durchgehende Gewindeöffnung für die Aufnahme der Wurmschraube auf (nicht dargestellt). Zum Fixieren der Einstellung wird die Wurmschraube 52 fest angezogen, so dass sie im Innern der Lagerbuchse kraftschlüssig mit der Exzenterbüchse 41 in Wirkverbindung gebracht wird.

In einer besonderen Ausführungsform der Exzenterbüchse, kann diese im Bereich des Zusammenwirkens mit der Wurmschraube 52 eine Rändelung aufweisen oder ein durch Schrubben, Feilen, Schleifen, Ätzen oder ein ähnliches Verfahren aufgeraute Oberfläche.

In einer besonderen Ausführungsform des Scharniers 10, wie in den Figuren 1 bis 3 dargestellt ist, ist der Doppelbolzen 42 als Exzenterbolzen ausgebildet. Ein Bolzenende ist zentrisch bezüglich der mittigen Verdickung mit der zweiten Verstellkrone 60' angeordnet, das andere Bolzenende ist exzentrisch gegenüber der zweiten Verstellkrone 60' und dem anderen Bolzenende angeordnet. Dabei spielt es keine Rolle ob das erste Bolzenende 43, das in der Exzenterbüchse 41 der ersten Lagerbuchse 14 gefasst ist, exzentrisch angeordnet ist oder das zweite Bolzenende 44, das der zweiten Lagerbuchse 24 gelagert ist. Weist das Scharnier 10 als Doppelbolzen 42 einen solchen Exzenterbolzen auf, so können durch Verdrehen des Exzenterbolzens die beiden Elemente 1, 2 zusätzlich in einer zweiten senkrecht zur Längsrichtung 8 des Scharniers 10 verlaufenden Richtung lateral gegeneinander verschoben werden, womit sich eine dreidimensionale Verstellbarkeit des Scharniers 10 und der beiden Elemente 1, 2 gegeneinander ergibt.

Die durch Verdrehen des Exzenterbolzens erreichte Einstellung der Elemente 1, 2 zueinander kann mit einer Verriegelung 52', die in dem in den Figuren gezeigten Beispiel ebenfalls als Wurmschraube 52' ausgebildet ist, fixiert werden. Die Lagerbuchse weist eine entsprechende durchgehende Gewindeöffnung für die Aufnahme der Wurmschraube auf (nicht dargestellt). Zur Fixierung wird die Wurmschraube 52' fest angezogen, so dass sie im Innern der Lagerbuchse kraftschlüssig mit dem Exzenterbolzen in Wirkverbindung gebracht wird. In der in den Figuren gezeigten Ausführungsform wirkt die Wurmschraube im Endbereich 43' des ersten Bolzenendes 43 mit dem Exzenterbolzen 42 fixierend zusammen. Eine andere Möglichkeit bestünde z.B. darin die Exzenterbüchse mit einem oder mehreren sich in Umfangsrichtung erstreckenden Langlöchern zu versehen durch die hindurch die Wurmschraube 52 mit dem Exzenterbolzen 42 kraftschlüssig in Eingriff gebracht werden kann.

In einer besonderen Ausführungsform kann der Exzenterbolzen in dem Bereich, in dem er mit der Verriegelung zusammenwirkt mit einer rauen Oberfläche versehen sein. Diese kann durch Ätzen oder Schleifen oder Schrubben oder Rändeln oder ähnliche Verfahren hergestellt sein.

In einer anderen Ausführungsform wird ein zweidimensional einstellbares Scharnier dadurch verwirklicht, dass statt der Exzenterbüchse 41 eine normale Büchse z.B. ebenfalls eine Pressbüchse, und ein Doppelbolzen 42 in Form eines oben beschriebenen Exzenterbolzens verwendet wird.

In einer weiteren Ausführungsform wird die dreidimensionale Verstellbarkeit dadurch realisiert, dass beide Bolzenenden 43, 44 des Doppelbolzens 41 exzentrisch bezüglich der zwischen ihnen befindlichen zweiten Verstellkrone 60' angeordnet sind und zwar vorzugsweise ca. um 90° versetzt zueinander und etwa um die gleiche Distanz aus dem Zentrum versetzt. Auf diese Wese kann auf die Exzenterbüchse im Scharnier 10 verzichtet werden.

Anders als in den Figuren dargestellt, ist es natürlich auch möglich die Exzenterverstellbarkeit und die Verstellbarkeit in Längsrichtung 8 des Scharniers 10 auf der gleichen Seite des Scharniers 10, also im Bereich der gleichen Lagerbuchse 14, 24 zu realisieren. Dabei ist es unerheblich ob dies im Bereich der ersten Lagerbuchse 14 oder im Bereich der zweiten, durch den gekrümmten Flansch 28 mit ihrer zweiten Befestigungsplatte 22 verbundenen Lagerbuchse 24 realisiert wird. Auch kann entgegen des gezeigten Beispiels die Verstellbarkeit in Längsrichtung 8 im Bereich der ersten Lagerbüchse 14 und die Exzenterverstellbarkeit im Bereich der zweiten Lagerbüchse 24 realisiert sein.

## Patentansprüche

1. Verstellbares Scharnier (10) zum schwenkbaren Verbinden eines ersten Elements (1) mit einem zweiten Element (2), wobei das Scharnier (10) über zwei in einer Längsrichtung (8) des Scharniers (10) einander gegenüberliegende und gegeneinander verdrehbare Bauteile (14, 24) verfügt, wobei diese Bauteile (14, 24) entweder ein Bolzen und eine den Bolzen aufnehmende Lagerbuchse oder ein Doppelbolzen und zwei Lagerbuchsen sind, die je ein Bolzenende des Doppelbolzens aufnehmen, wobei durch Lagerbuchse und Bolzen die Längsrichtung (8) des Scharniers (10) definiert ist, und das Scharnier (10) Verstellelemente (3) aufweist, die optional mit einer Verriegelung (5) versehen sind, und von denen
• ein erstes Verstellelement (3) exzentrisch ausgebildet ist und der lateralen Verschiebbarkeit der Elemente (1, 2) gegeneinander senkrecht zur Längsrichtung (8) des Scharniers (10) dient; und
• ein zweites Verstellelement (3) der Verschiebbarkeit der Elemente (1, 2) gegeneinander in Längsrichtung (8) des Scharniers (10) dient,
• die Verstellelemente (3) und optional die Verriegelung (5) eine Verstellkrone (60, 60', 60", 60"') aufweisen, und
• die Verstellkrone (60, 60', 60", 60"') ähnlich einer Scheibe mit kreisförmigem oder polygonem Umfang ausgestaltet ist und über ihren Umfang verteilt mehrere radiale Eingriffsöffnungen (62) aufweist,
**dadurch gekennzeichnet, dass**
• in Längsrichtung des Scharniers wirkende Kräfte zwischen einem Bolzen und einer Lagerbuchse über eine Druckscheibe (40, 40', 40") geleitet werden, welche eine zentrale Durchgangsöffnung (39) aufweist und wenigstens auf einer Seite (80; 90) ein mit dieser Durchgangsöffnung (3) in Verbindung stehendes Kanalsystem (82, 84; 88, 92) für die Verteilung von Schmiermittel aufweist.

2. Scharnier (10) nach Anspruch 1,
**dadurch gekennzeichnet, dass**
das erstes Bauteil (14) mit dem ersten Element (1) verbindbar ist, und das zweite Bauteil (24) über ein freies Ende eines gekrümmten Flansches (28) mit dem zweiten Element (2) verbindbar ist, wobei die Krümmung des Flansches (28) den Flansch (28) mit seinem freien Ende teilweise um das Bauteil (14, 24) herumführt.

3. Scharnier (10) nach Anspruch 2
**dadurch gekennzeichnet, dass**
das Scharnier in eingebautem Zustand wenigstens mit seinen in Längsrichtung (8) des Scharniers (10) einander gegenüberliegenden und gegeneinander verdrehbaren Bauteilen (14, 24) des Scharniers (10) innerhalb einer Ausnehmung (4) eines der Elemente (1, 2) platziert ist und nur das freie Ende des gekrümmten Flansches (28) aus der Ausnehmung (4) heraus ragt und der Flansch (28) aus der Ausnehmung (4) heraus und in diese hinein verschwenkbar ist.

4. Scharnier (10) nach Anspruch 3,
**dadurch gekennzeichnet, dass**
die Ausnehmung (4) mit einer Abdeckplatte (70) derart verschließbar ist, dass der Projektionsbereich wenigstens eines der beiden einander in Längsrichtung (8) gegenüberliegenden und gegeneinander verdrehbaren Bauteile (14, 24) zumindest teilweise verdeckt ist und wobei die Funktion des Flansches (28) gewährleistet bleibt.

5. Scharnier (10) nach einem der Ansprüche 1 bis 4,
**dadurch gekennzeichnet, dass**
• die zwei in Längsrichtung (8) des Scharniers (10) einander gegenüberliegenden und gegeneinander verdrehbaren Bauteile (14, 24) des Scharniers (10) mittels Befestigungsplatten (12, 22) mit den Elementen (1, 2) verbindbar sind, wobei die eine Befestigungsplatte am freien Ende des gekrümmten Flansches (28) angeordnet ist, und
• die Krümmung so gewählt ist, dass in einer ersten geschlossenen Stellung des Scharniers (10), die beiden Befestigungsplatten (12, 22) in einer Ebene oder in zwei parallelen nahe beieinander liegenden Ebenen liegen und die beiden Befestigungsplatten (12, 22) in einer zweiten maximal offenen Stellung des Scharniers in einem Winkel von etwa 90° bis 110° zueinander stehen.

6. Scharnier (10) nach einem der vorhergehenden Ansprüche,
**dadurch gekennzeichnet, dass**
der gekrümmte Flansch derart teilweise um das Bauteil (14, 24) herumgeführt ist, dass das freie Ende des Flansches (28) ausserhalb einer Tangente des drehbaren Bauteils (14, 24) liegt, in welcher der Flansch (28) am Bauteil (14, 24) angreift.

7. Scharnier (10) nach einem der vorhergehenden Ansprüche,
**dadurch gekennzeichnet, dass**
die Krümmung des Flansches (28) in Öffnungsrichtung des Scharniers ausgerichtet ist und den Flansch (28) mit seinem freien Ende insbesondere maximal etwa u-förmig und wenigstens etwa rechtwinklig um das Bauteil herumführt.

8. Scharnier (10) nach einem der vorhergehenden Ansprüche,
**dadurch gekennzeichnet, dass**
die zwei in der Längsrichtung (8) des Scharniers (10) einander gegenüberliegenden und gegeneinander verdrehbaren Bauteile des Scharniers (10) eine erste Lagerbuchse (14) und eine zweite Lagerbuchse (24) sind, und dass diese mittels eines Doppelbolzens (42) in der Längsrichtung (8) des Scharniers (10) einander gegenüberliegend und gegeneinander verdrehbar angeordnet sind.

9. Scharnier (10) nach Anspruch 8,
**dadurch gekennzeichnet, dass**
der Doppelbolzen (42) ein Verstellelement (3) in Form eines Exzenterbolzens ist und zwischen seinen beiden Bolzenenden (43, 44) eine zweite Verstellkrone (60') aufweist, wobei wenigstens ein Bolzenende gegenüber der zweiten Verstellkrone (60') exzentrisch angeordnet ist.

10. Scharnier (10) nach Anspruch 8 oder 9,
**dadurch gekennzeichnet, dass**
wenigstens in einer der beiden Lagerbuchsen (14, 24) als ein Verstellelement (3) eine Exzenterbüchse (41) gelagert ist, die eine erste Verstellkrone (60) aufweist.

11. Scharnier (10) nach einem der vorhergehenden Ansprüche,
**dadurch gekennzeichnet, dass**
die Druckscheibe (40, 40', 40") eine zentrale Durchgangsöffnung (39) aufweist und wenigstens auf einer Seite eine Kreuznut (84) oder eine Stichnut (88), welche die Durchgangsöffnung (39) mit einer Kreisnut (86) und/oder mit einer Umfangsnut (82) verbindet.

12. Scharnier (10) nach einem der vorhergehenden Ansprüche,
**dadurch gekennzeichnet, dass**
die Lagerbuchse(n) (14, 24) eine Durchgangsöffnung (38, 49) aufweist/aufweisen, über welche Schmiermittel eingebracht werden kann und diese Durchgangsöffnung (38, 49) so angeordnet ist, dass sie mit der Durchgangsöffnung (39) der Druckscheibe (40, 40', 40") fluchtet.

13. Scharnier (10) nach einem der vorhergehenden Ansprüche ,
**dadurch gekennzeichnet, dass**
das Verstellelement (3) für die Verstellbarkeit in Längsrichtung des Scharniers (10) als Stellschraube (48) ausgestaltet ist, die mit einer dritten Verstellkrone (60"') versehen ist, wobei die optionale Verriegelung (5) für die Stellschraube (48) vorzugsweise eine Kontermutter (50) mit einer vierten Verstellkrone (60") ist.

14. Scharnier (10) nach einem der vorhergehenden Ansprüche,
**dadurch gekennzeichnet, dass**
die Verstellkrone (60, 60', 60", 60"') mit einer oder mehreren Markierungen (64) versehen ist und insbesondere jede Eingriffsöffnung (62) mit einer Markierung (64) versehen ist, mit der sie eindeutig identifizierbar ist, wobei die radialen Eingriffsöffnungen (62) vorzugsweise gleichmäßig über den Umfang der Verstellkrone (60, 60', 60", 60"') verteilt sind.

15. Scharnier (10) nach einem der vorhergehenden Ansprüche,
**dadurch gekennzeichnet, dass**
• die Verstellkronen (60, 60', 60", 60"') im Scharnier (10) derart angeordnet sind, dass die radialen Eingriffsöffnungen (62) senkrecht zur Längsrichtung (8) des Scharniers (10) ausgerichtet sind.

## Claims

1. Adjustable hinge (10) for pivotably connecting a first element (1) to a second element (2), the hinge (10) being provided with two components (14, 24) that are mutually opposed in the longitudinal direction (8) of the hinge (10) and rotatable against one another, the two components (14, 24) being either a bolt and a bearing bush receiving the bolt or a double-ended bolt and two bearing bushes each receiving one bolt end of the double-ended bolt, the longitudinal direction (8) of the hinge (10) being defined by the bearing bush and bolt, and the hinge (10) having adjustment elements (3), which are optionally provided with a locking mechanism (5), and of which
• a first adjustment element (3) is formed eccentrically and is used to provide the possibility for lateral displacement of the elements (1, 2) against one another perpendicular to the longitudinal direction (8) of the hinge (10); and
• a second adjustment element (3) is used to provide the possibility for displacement of the elements (1, 2) against one another in the longitudinal direction (8) of the hinge (10),
• the adjustment elements (3) and optionally the locking mechanism (5) have an adjustment crown (60, 60', 60", 60"'), and
• the adjustment crown (60, 60', 60", 60"') is designed similarly to a disk with a circular or polygonal periphery and has a plurality of radial engagement openings (62) distributed over its periphery,
**characterized in that**
• forces acting in the longitudinal direction of the hinge are conveyed between a bolt and a bearing bush via a pressure disk (40, 40', 40'), which has a central through-opening (39) and at least at one side (80; 90) a channel system (82, 84; 88, 92) for distribution of lubricant.

2. Hinge (10) according to claim 1,
**characterized in that**
the first component (14) is connectable to the first element (1), and the second component (24) is connectable to the second element (2) via a free end of a curved flange (28), the curvature of the flange (28) guiding the free end of the flange (28) around the component (14, 24) in part.

3. Hinge (10) according to claim 2,
**characterized in that**
in the fitted state the hinge is placed, at least via its components (14, 24) of the hinge (10) that are mutually opposed in the longitudinal direction (8) of the hinge (10) and can be rotated against one another, within a recess (4) in one of the elements (1, 2), and only the free end of the curved flange (28) protrudes from the recess (4), and the flange (28) can be pivoted out from the recess (4) and into the recess.

4. Hinge (10) according to claim 3,
**characterized in that**
the recess (4) is closable by a cover plate (70) in such a way that the projection region of at least one of the two components (14, 24) that are mutually opposed in the longitudinal direction (8) and rotatable against one another is covered, at least in part, the function of the flange (28) still being maintained.

5. Hinge (10) according to any one of claims 1 to 4, **characterized in that**
• the two components (14, 24) of the hinge (10) that are mutually opposed in the longitudinal direction (8) of the hinge (10) and rotatable against one another are connectable to the elements (1, 2) by means of fastening plates (12, 22), a fastening plate being arranged at the free end of the curved flange (28), and
• the curvature is selected so that, in a first closed position of the hinge (10), the two fastening plates (12, 22) lie in one plane or in two parallel planes arranged close together and, in a second, maximally open position of the hinge, the two fastening plates (12, 22) are arranged at an angle of approximately 90° to 110° to one another.

6. Hinge (10) according to any one of the preceding claims,
**characterized in that**
the curved flange is guided in part around the component (14, 24) in such a way that the free end of the flange (28) is located outside of a tangent of the rotatable component (14, 24), where the flange (28) engages at the component (14, 24).

7. Hinge (10) according to any one of the preceding claims, **characterized in that**
the curvature of the flange (28) is oriented in direction of the opening of the hinge (10) and the flange (28) with its free end is guided in particular at maximum approximately in a u-form and at least approximately at a right angle around the component.

8. Hinge (10) according to any one of the preceding
claims,
**characterized in that**
the two components of the hinge (10) that are mutually opposed in the longitudinal direction (8) of the hinge (10) and rotatable against one another are a first bearing bush (14) and a second bearing bush (24), and **in that** these are arranged by means of a double-ended bolt (42) so as to be mutually opposed in the longitudinal direction (8) of the hinge (10) and so as to be rotatable against one another.

9. Hinge (10) according to Claim 8,
**characterized in that**
the double-ended bolt (42) is an adjustment element (3) and is formed as an eccentric bolt and has a second adjustment crown (60') between its two bolt ends (43, 44), at least one bolt end being arranged eccentrically in relation to the second adjustment crown (60').

10. Hinge (10) according to claim 8 or 9,
**characterized in that**
an eccentric bush (41), which has a first adjustment crown (60), is mounted at least in one of the two bearing bushes (14, 24).

11. Hinge (10) according to any one of the preceding claims,
**characterized in that**
the pressure disk (40, 40', 40") has a central through-opening (39) and a cross-shaped groove (84) or a tapping groove (88) at least on one side, said groove connecting the through-opening (39) to a circular groove (86) and/or to a peripheral groove (82).

12. Hinge (10) according to any one of the preceding claims,
**characterized in that**
the bearing bush(es) (14, 24) has/have a through-opening (38, 49) through which lubricant can be introduced, this through-opening (38, 49) being arranged such that it/they is/are aligned with the through-opening (39) in the pressure disk (40, 40', 40").

13. Hinge (10) according to any one of the preceding claims,
**characterized in that**
the adjustment element (3) for providing the possibility for adjustment in the longitudinal direction of the hinge (10) is designed as a set-screw (48), which is provided with a third adjustment crown (60"'), the optional locking mechanism (5) for the set-screw (48) preferably being a check nut (50) having a fourth adjustment crown (60").

14. Hinge (10) according to any one of the preceding claims,
**characterized in that**
the adjustment crown (60, 60', 60", 60"') is provided with one or more markings (64), and in particular each engagement opening (62) is provided with a marking (64), with which it is clearly identifiable, the radial engagement openings (62) preferably being distributed uniformly over the periphery of the adjustment crown (60, 60', 60", 60"').

15. Hinge (10) according to any one of the preceding claims,
**characterized in that**
• the adjustment crowns (60, 60', 60", 60"') are arranged in the hinge (10) in such a way that the radial engagement openings (62) are oriented perpendicular to the longitudinal direction (8) of the hinge (10).

## Revendications

1. Charnière réglable (10) pour la jonction pivotante d'un premier élément (1) avec un second élément (2), la charnière (10) disposant de deux composants (14, 24) opposés l'un à l'autre dans un sens longitudinal (8) de la charnière (10) et rotatifs l'une par rapport à l'autre, ces composants (14, 24) étant soit un boulon et un coussinet qui reçoit le boulon, soit un double boulon et deux coussinets qui reçoivent chacun une extrémité de boulon du double boulon, le sens longitudinal (8) de la charnière (10) étant défini par le coussinet et le boulon et la charnière (10) présentant des éléments de réglage (3) qui sont pourvus en option d'un verrouillage (5) et dont
• un premier élément de réglage (3) est configuré excentré et sert à la possibilité de déplacement latéral des éléments (1, 2) l'un par rapport à l'autre perpendiculairement au sens longitudinal (8) de la charnière (10) et
• un second élément de réglage (3) sert à la possibilité de déplacement des éléments (1, 2) l'un par rapport à l'autre dans le sens longitudinal (8) de la charnière (10),
• les éléments de réglage (3) et en option le verrouillage (5) présentent une couronne de réglage (60, 60', 60", 60"') et
• la couronne de réglage (60, 60', 60", 60"') est configurée de manière similaire à un disque avec une circonférence circulaire ou polygonale et présente plusieurs ouvertures d'engrènement radiales (62) distribuées sur sa circonférence,
**caractérisée en ce que**
• des forces qui agissent dans le sens longitudinal (8) de la charnière sont guidées entre un boulon et un coussinet par un disque de pression (40, 40', 40") qui présente une ouverture de passage centrale (39) et qui présente, au moins sur un côté (80 ; 90) un système de canal (82, 84 ; 88, 92) qui est en relation avec cette ouverture de passage (3) pour la distribution de lubrifiant.

2. Charnière (10) selon la revendication 1, **caractérisée en ce que** le premier composant (14) peut être relié au premier élément (1) et le second composant (24) peut être relié au second élément (2) par une extrémité libre d'une bride recourbée (28), la courbure de la bride (28) guidant la bride (28) avec son extrémité libre partiellement autour du composant (14, 24).

3. Charnière (10) selon la revendication 2, **caractérisée en ce que** la charnière, à l'état monté, est placée à l'intérieur d'un évidement (4) d'un des éléments (1, 2) au moins avec ses composants (14, 24) opposés l'un à l'autre dans le sens longitudinal (8) de la charnière (10) et rotatifs l'un par rapport à l'autre et seulement l'extrémité libre de la bride recourbée (28) fait saillie hors de l'évidement (4) et la bride (28) peut sortir par pivotement hors de l'évidement (4) et y rentrer par pivotement.

4. Charnière (10) selon la revendication 3, **caractérisée en ce que** l'évidement (4) peut être fermé avec une plaque de recouvrement (70) de telle manière que la zone de projection d'au moins l'un des deux composants (14, 24) opposés l'un à l'autre dans le sens longitudinal (8) de la charnière (10) et rotatifs l'un par rapport à l'autre est au moins partiellement couverte et le fonctionnement de la bride (28) restant garanti.

5. Charnière (10) selon l'une des revendications 1 à 4, **caractérisée en ce que**
• les deux composants (14, 24) opposés l'un à l'autre dans le sens longitudinal (8) de la charnière (10) et rotatifs l'un par rapport à l'autre peuvent être reliés aux éléments (1, 2) au moyen de plaques de fixation (12, 22), l'une des plaques de fixation étant placée à l'extrémité libre de la bride recourbée (28) et
• la courbure est choisie telle que, dans une première position fermée de la charnière (10), les deux plaques de fixation (12, 22) se situent dans un plan ou dans deux plans parallèles proches l'un de l'autre et les deux plaques de fixation (12, 22), dans une seconde position ouverte au maximum de la charnière, forment un angle d'environ 90° à 110° l'une avec l'autre.

6. Charnière (10) selon l'une des revendications précédentes, **caractérisée en ce que** la bride recourbée est guidée partiellement autour du composant (14, 24) de telle manière que l'extrémité libre de la bride (28) se situe à l'extérieur d'une tangente du composant rotatif (14, 24) dans laquelle la bride (28) se met en prise sur le composant (14, 24).

7. Charnière (10) selon l'une des revendications précédentes, **caractérisée en ce que** la courbure de la bride (28) est orientée dans le sens de l'ouverture de la charnière et guide la bride (28) autour du composant avec son extrémité libre en particulier au maximum à peu près en forme de U et au moins approximativement en angle droit.

8. Charnière (10) selon l'une des revendications précédentes, **caractérisée en ce que** les deux composants (14, 24) de la charnière (10) opposés l'un à l'autre dans le sens longitudinal (8) de la charnière (10) et rotatifs l'un par rapport à l'autre sont un premier coussinet (14) et un second coussinet (24) et que ceux-ci sont placés opposés l'un à l'autre dans le sens longitudinal (8) de la charnière (10) et rotatifs l'un par rapport à l'autre au moyen d'un double boulon (42).

9. Charnière (10) selon la revendication 8, **caractérisée en ce que** le double boulon (42) est un élément de réglage (3) en forme de boulon excentrique et présente, entre ses deux extrémités de boulon (43, 44), une seconde couronne de réglage (60'), au moins une extrémité de boulon étant placée excentrée par rapport à la seconde couronne de réglage (60').

10. Charnière (10) selon la revendication 8 ou 9, **caractérisée en ce qu'**un coussinet d'excentrique (41) qui présente une première couronne de réglage (60) est positionnée au moins dans l'un des deux coussinets (14, 24) en tant qu'élément de réglage (3).

11. Charnière (10) selon l'une des revendications précédentes, **caractérisée en ce que** le disque de pression (40, 40', 40") présente une ouverture de passage centrale (39) et au moins sur un côté une rainure croisée (84) ou une rainure piquée (88) qui relie l'ouverture de passage (39) à une rainure circulaire (86) et/ou à une rainure circonférentielle (82).

12. Charnière (10) selon l'une des revendications précédentes, **caractérisée en ce que** le(s) coussinet(s) (14, 24) présente(nt) une ouverture de passage (38, 49) par laquelle un lubrifiant peut être introduit et cette ouverture de passage (38, 49) est placée de telle manière qu'elle est alignée avec l'ouverture de passage (39) du disque de pression (40, 40', 40").

13. Charnière (10) selon l'une des revendications précédentes, **caractérisée en ce que** l'élément de réglage (3) pour la possibilité de réglage dans le sens longitudinal de la charnière (10) est configuré en tant que vis de réglage (48) qui est pourvue d'une troisième couronne de réglage (60"'), le verrouillage optionnel (5) pour la vis de réglage (48) étant de préférence un contre-écrou (50) avec une quatrième couronne de réglage (60").

14. Charnière (10) selon l'une des revendications précédentes, **caractérisée en ce que** la couronne de réglage (60, 60', 60", 60"') est pourvue d'un ou de plusieurs marquages (64) et en particulier chaque ouverture d'engrènement (62) est pourvue d'un marquage (64) avec lequel elle peut être clairement identifiée, cependant que les ouvertures d'engrènement radiales (62) sont réparties de préférence de manière régulière sur la circonférence de la couronne de réglage (60, 60', 60", 60"').

15. Charnière (10) selon l'une des revendications précédentes, **caractérisée en ce que**
• les couronnes de réglage (60, 60', 60", 60"') sont placées dans la charnière (10) de telle manière que les ouvertures d'engrènement radiales (62) sont orientées perpendiculairement au sens longitudinal (8) de la charnière (10).
